# EUROPÄISCHE PATENTANMELDUNG

(11) **EP 1 118 863 A2**
(43) Veröffentlichungstag der Anmeldung: **25.07.2001**
(21) Anmeldenummer: 01100292.0
(22) Anmeldetag: 04.01.2001
(51) Int. Cl.: G01P 13/00

(54) **Einrichtung zum Überprüfen und/oder Beeinflussen der Strömung in einem Fluid**

(30) Priorität: 05.01.2000 DE 10000178
(71) Anmelder: Müller, Friedrich, 74670 Forchtenberg (DE)
(72) Erfinder: Fauser, Hans-Peter, 74653 Ingelfingen (DE); Heusser, Ralf, 74670 Forchtenberg (DE); Kern, Dieter, 74670 Forchtenberg (DE); Köhler, Udo, 74670 Forchtenberg (DE); Schulz, Bernd, 74360 Ilsfeld (DE); Eberhard, Ralph, 74613 Öhringen (DE)
(74) Vertreter: Patentanwälte Ruff, Beier und Partner

(57) **Zusammenfassung**

Eine Einrichtung zum Überprüfen, Überwachen und/oder Beeinflussen der Strömung eines Fluids enthält einen Kolben, der bewegbar angeordnet ist. Auf seiner Vorderseite wird er von dem Druck des anströmenden Fluids beaufschlagt, während auf seiner Rückseite der verringerte Druck des abströmenden Fluids herrscht. Durch diesen Druckunterschied, der nur dann auftritt, wenn das Fluid strömt, wird der Kolben gegen die Wirkung einer sich spannenden Druckfeder bewegt. Die Bewegung des Kolbens aus einer Ausgangsposition, die dann vorhanden ist, wenn das Fluid nicht strömt, wird abgenommen. Die Abnahme kann entweder von einem Sensor durchgeführt werden oder direkt in eine Bewegung eines Verschlusskörpers eines Ventils umgesetzt werden, das damit zu einem Volumenstromregelventil wird.

## Beschreibung

Fluide, beispielsweise Flüssigkeiten, werden in Leitungssystemen befördert. In den Leitungssystemen sind Ventile angeordnet, sowohl Proportionalventile als auch solche Ventile, die nur ein- und ausgeschaltet werden. Es besteht die Notwendigkeit, überprüfen zu können, ob nach dem Öffnen eines Ventils tatsächlich eine Strömung stattfindet. Geräte, mit denen dies festgestellt werden kann, werden häufig Strömungswächter genannt.

Der Erfindung liegt die Aufgabe zugrunde, eine Einrichtung zum Überprüfen und/oder Beeinflussen der Strömung in einem Fluid zu schaffen, mit der die Wirkungsweise von Ventilen überprüft und/oder verbessert werden kann.

Zur Lösung dieser Aufgabe schlägt die Erfindung eine Einrichtung mit den Merkmalen des Anspruchs 1 vor. Weiterbildungen der Erfindung sind Gegenstand der abhängigen Ansprüche, deren Wortlaut ebenso wie der Wortlaut der Zusammenfassung durch Bezugnahme zum Inhalt der Beschreibung gemacht wird.

Der Kolben wird so angeordnet, dass er von der Strömung des zu überprüfenden Fluids auf seiner Vorderseite beaufschlagt wird. Auf seiner Rückseite wird er von der abströmenden Strömung beaufschlagt. Durch den Druckunterschied in dem Fluid zwischen der Vorderseite und der Rückseite des Kolbens, der sich beispielsweise aufgrund einer Querschnittsverminderung ergibt, wird der Kolben unterschiedlich stark beaufschlagt. Er wird also durch die Druckdifferenz gegen die Wirkung der Feder bewegt. Diese Bewegung wird von der Abnahmeeinrichtung festgestellt. Diese kann beispielsweise so ausgebildet sein, dass das Verlassen des Kolbens aus der Position, in der er sich dann befindet, wenn keine Strömung stattfindet, festgestellt und angezeigt wird. Ebenfalls möglich ist es, dass das Erreichen einer von dieser Ausgangsposition verschiedenen Position ermittelt und festgestellt wird.

Der Kolben kann beispielsweise im Nebenstrom des Fluids angeordnet werden.

Ebenfalls möglich ist es, dass der Kolben im Hauptstrom des Fluids angeordnet wird. Er wird dann also von dem Fluid direkt angeströmt und umströmt.

In Weiterbildung der Erfindung kann vorgesehen sein, dass die Einrichtung zur Abnahme der Position des Kolbens ein insbesondere berührungsfrei arbeitender Sensor bzw. Detektor ist. Solche Detektoren sind an sich bekannt. Sie können beispielsweise auf das Material des Kolbens ansprechen, also beispielsweise induktiv arbeiten. Selbstverständlich sind auch andere Möglichkeiten zur Feststellung der Position des Kolbens anwendbar, beispielsweise Reed-Schalter oder auch Lichtschranken.

Insbesondere kann vorgesehen sein, dass die Einrichtung zur Abnahme der Position des Kolbens in mehreren Positionen arbeitet, das heißt mehrere Positionen des Kolbens erkennen und unterscheiden kann. Dabei kann es sich sowohl um eine diskontinuierlich arbeitende Einrichtung als auch insbesondere um eine kontinuierlich arbeitenden Einrichtung handeln, die also die exakte Position des Kolbens feststellen kann.

Die Einrichtung zur Abnahme der Position des Kolbens kann in Weiterbildung der Erfindung ein bewegbarer Teil eines zugeordneten Ventils sein, insbesondere der Verschlusskörper des Ventils. Auf diese Weise kann die von der Erfindung vorgeschlagene Einrichtung dazu dienen, ein Volumenstromregelventil zu bilden.

Erfindungsgemäß kann in Weiterbildung vorgesehen sein, dass der bewegbare Kolben in einer Bohrung oder einem Leitungsstück derart angeordnet ist, dass er eine Verringerung des von der Strömung durchflossenen Querschnitts der Bohrung bewirkt. Dies kann beispielsweise so geschehen, dass der Kolben als Schwebekörper ausgebildet ist und die Strömung zwischen ihm und der Wand der Bohrung hindurch strömt.

In Weiterbildung der Erfindung kann vorgesehen sein, dass der Kolben zwischen zwei Extrempositionen begrenzt bewegbar angeordnet ist.

In nochmaliger Weiterbildung der Erfindung kann vorgesehen sein, dass die Druckdifferenz zwischen der Vorderseite und der Rückseite des Kolbens veränderbar bzw. einstellbar ist, vorzugsweise auch während des Strömens des Fluids. Auf diese Weise lässt sich der Ansprechpunkt des Detektors oder die Sollposition eines zugeordneten Ventils verändern.

Insbesondere kann vorgesehen sein, dass die Änderung der Druckdifferenz durch eine Veränderung einer Querschnittsverringerung des Strömungsquerschnitts erfolgt. Möglich wäre auch die Änderung der Ansprechempfindlichkeit des Kolbens durch eine Änderung der Feder.

In nochmaliger Weiterbildung der Erfindung kann vorgesehen sein, dass die Verringerung des Strömungsquerschnitts und damit die Druckdifferenz von der Position des Kolbens abhängig ist. Dies kann beispielsweise durch Änderungen der Geometrie erreicht werden, so dass bei einer Bewegung des Kolbens der Querschnitt der verbleibenden Fläche sich ändert.

Erfindungsgemäß kann in Weiterbildung vorgesehen sein, dass die Einrichtung im Strömumgsweg eines Ventils angeordnet ist. Dies kann sowohl vor dem Ventil als auch hinter dem Ventil sein. Damit kann die Einrichtung dazu verwendet werden, die Wirkungsweise des Ventils zu überprüfen. Insbesondere kann die Einrichtung mit dem Ventil in eine Baugruppe zusammengefasst werden.

Eine Möglichkeit, wie die Druckdifferenz eingestellt werden kann, besteht darin, dass der Kolben eine in Strömungsrichtung verlaufende seitlich offene Kerbe aufweist, in die ein durch die Wand einer Leitung hindurchgreifendes Drosselelement eingreift. Dieses Drosselelement kann beispielsweise unterschiedlich weit eingreifen, oder es kann einen nicht kreisrunden Querschnitt aufweisen und verdreht werden. In beiden Fällen wird der Strömungsquerschnitt zwischen der Kerbe und dem Drosselelement verändert.

Insbesondere kann vorgesehen sein, dass die Kerbe oder eine andere Öffnung eine in Strömungsrichtung nicht konstante Querschnittsfläche aufweist. Dadurch ändert sich beim Ansprechen des Kolbens die Querschnittsfläche und damit die Druckdifferenz. Es lassen sich auf diese Weise die Regelkurven des Strömungswächters oder eines mit ihm verbundenen Ventils fast beliebig gestalten.

Weitere Merkmale, Einzelheiten und Vorzüge der Erfindung ergeben sich aus der folgenden Beschreibung einer bevorzugten Ausführungsform der Erfindung sowie anhand der Zeichnung. Hierbei zeigen:
- Fig. 1: schematisch den Aufbau einer Einrichtung nach der Erfindung;
- Fig. 2: eine Stirnansicht des bewegbaren Kolbens der Ausführungsform nach Figur 1;
- Fig. 3: einen Axialschnitt durch den Kolben der Figur 1 und 2;
- Fig. 4: einen Axialschnitt durch eine Kombination aus einem Strömungswächter und einem Koaxialventil;
- Fig. 5: einen Längsschnitt durch ein Volumenstromregelventil;
- Fig. 6: einen Schnitt durch ein Volumenstromregelventil nach einer weiteren Ausführungsform.

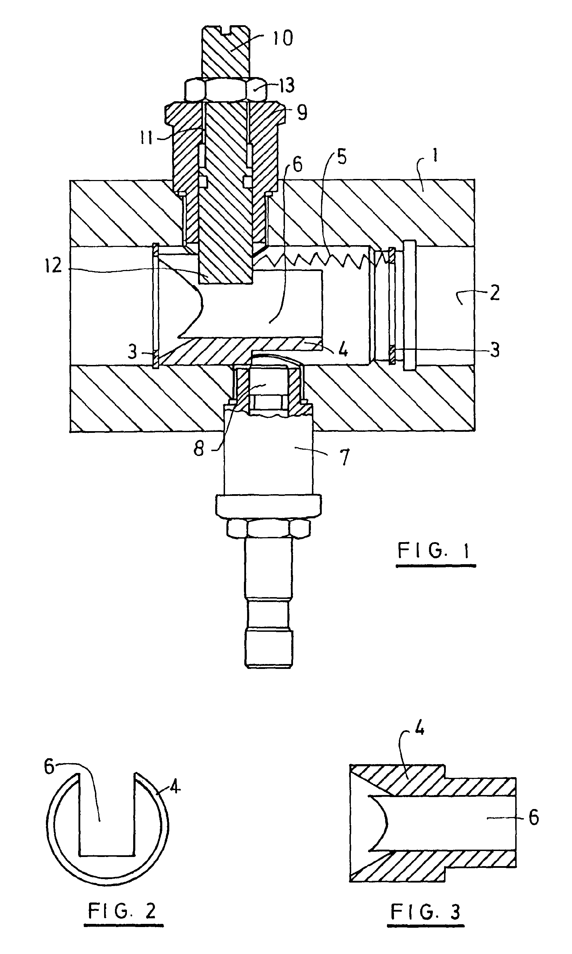

Figur 1 zeigt in einem Axialschnitt eine Einrichtung nach der Erfindung, wie sie als Strömungswächter verwendet werden kann. In einem Leitungsstück 1, das beispielsweise Teil einer Leitung sein kann, ist ein axialer Durchgang 2 ausgebildet, der im folgenden der Einfachheit halber als Bohrung bezeichnet wird, auch wenn er etwas komplizierter aufgebaut ist. In der Bohrung sind in zwei umlaufende Nuten jeweils ein Sprengring 3 eingesetzt. Zwischen den beiden Sprengringen 3 ist ein Kolben 4 angeordnet, der von einer angedeuteten Feder 5 in Figur 1 nach links beaufschlagt wird. Die Strömungsrichtung für ein Fluid ist dabei von links nach rechts. Die Druckfeder beaufschlagt den Kolben 4 also entgegen der Strömungsrichtung. Der Kolben weist etwa Zylinderform mit einem Einschnitt oder einer Kerbe 6 auf. Er kann zwischen den beiden Sprengringen 3 hin und her bewegt werden. Eine spezielle Führung für ihn ist nicht erforderlich. Die Feder stützt sich an einer Schulter des Kolbens und an dem Sprengring 3 ab.

An der einen Seite des Leitungsstücks 1 ist in einer Bohrung ein induktiv arbeitender Sensor 7 eingeschraubt. Der eigentliche Aufnehmer 8 ist dabei bündig mit der Wand der Bohrung 2 angeordnet. Der Sensor 7 kann die Position des Kolbens 4 ermitteln. Beispielsweise spricht der Sensor 7 dann an, wenn der Kolben 4 aus der dargestellten Position um die in Längsrichtung der Bohrung 2 gemessene Erstreckung des Aufnehmers 8 nach rechts verschoben ist.

Auf der dem Sensor 7 abgewandten Seite des Leitungsstücks 1 ist in die Wand des Leitungsstücks 1 eine Buchse 9 eingeschraubt, die einen Durchgang für ein Drosselelement 10 enthält. Das Drosselelement 10 weist über einen Teil seiner Länge ein Außengewinde 11 auf, das in ein entsprechendes Innengewinde der Buchse 9 eingreift. An dem in das Innere der Bohrung 2 hinein ragenden Ende 12 ist das Drosselelement 10 glatt ausgebildet. Dieses innere Ende 12 ragt in die Kerbe 6 des Kolbens 4 hinein. Durch Verdrehen des Drosselelements 10 lässt sich dieses mehr oder weniger weit in das Innere der Bohrung 2 hinein schrauben, und damit auch in die Kerbe 6. Die gewählte Position des Drosselelements 10 kann durch eine Kontermutter 13 fixiert werden. Das Drosselelement 10 weist im Bereich seines in das Innere der Kerbe 6 ragenden Endes 12 einen kreisrunden Querschnitt auf. Die Querschnittsverminderung wird also durch mehr oder weniger weites Einschrauben in die Kerbe 6 hinein erreicht. Es wäre auch denkbar, dass das innere Ende 12 beispielsweise einen elliptischen Querschnitt aufwiese. In diesem Fall könnte eine Verringerung des Querschnitts durch eine Verdrehung ohne ein weiteres Hineinragen in die Kerbe 6 bewirkt werden.

Figur 2 zeigt eine Stirnansicht des Kolbens 4 von links in Figur 1. Der Kolben 4 weist die Form eines Zylinders mit einem dem Durchmesser der Bohrung 2 etwa gleichen Außendurchmesser auf. Auf ihrer Stirnseite, siehe Figur 2, ist eine Einsenkung vorhanden. Die bereits erwähnte Kerbe 6 erstreckt sich als Schlitz von der radialen Außenseite des Kolbens 4 bis über die Mitte des Durchmessers. Die Tiefe der Kerbe 6 ist in dem dargestellten Beispiel, siehe Figur 1, überall gleich. Der Teil der Kerbe 6, der von dem Drosselelement 10 freigelassen bleibt, bildet die Querschnittsfläche, die einer Strömung zur Verfügung steht.

Die Figur 3 zeigt einen horizontalen Längsschnitt durch den Kolben 4 der Figuren 1 und 2. Es ist zu sehen, dass die Kerbe 6 auch eine in Längsrichtung des Kolbens 4 gleichbleibende Breite aufweist.

Die Wirkungsweise der in den Figuren 1 bis 3 schematisch dargestellten Einrichtung ist die folgende. Sobald ein Fluid, beispielsweise eine Flüssigkeit, durch die Bohrung 2 von links nach rechts fließt, entsteht auf Grund der Querschnittssverringerung, hervorgerufen durch den freien Teil des Querschnitts der Kerbe 6, ein Druckunterschied zwischen der angeströmten Vorderseite des Kolbens 4, links in Figur 1, und seiner Rückseite rechts in Figur 1. Dieser Druckunterschied führt dazu, dass der Kolben 4 nach rechts in Figur 1 bewegt wird und dort die Druckfeder 5 spannt. Diese Bewegung erfolgt so lange, bis die durch den Druckunterschied hervorgerufene Kraft von der Kraft der Feder ausgeglichen wird. Diese Verschiebung des Kolbens 4 wird von dem Sensor 7 festgestellt und angezeigt. Die Einrichtung in Figur 1 stellt also einen Strömungswächter dar, mit dem festgestellt werden kann, ob durch die Bohrung 2 ein Fluid strömt oder nicht.

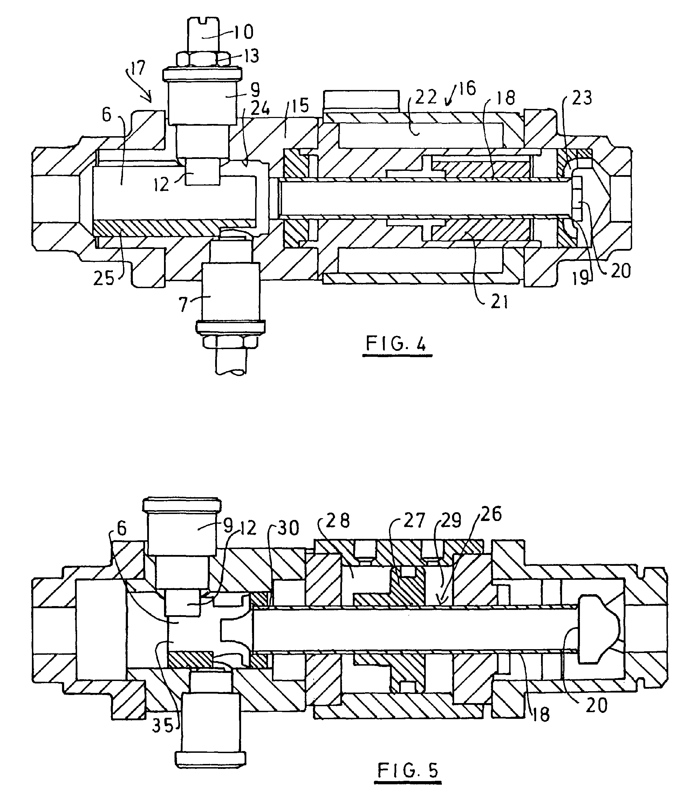

Nun zu der Figur 4. Figur 4 zeigt in einem gemeinsamen Ventilgehäuse 15 ein Koaxialventil 16 und einen Strömungswächter 17, wie er in Figur 1 schematisch erläutert wurde. Die Figur 4 zeigt das Koaxialventil 16 in geschlossenem Zustand. Es enthält als Verschlußelement ein Rohr 18, das mit einer scharfen Kante 19 rechts in Figur 4 auf einem Ventilsitz 20 aufsitzt. Das Rohr 18 ist an seiner Außenseite mit dem Anker 21 eines Magneten verbunden, der eine im Einzelfall nicht dargestellte Magnetspule 22 enthält. Wenn durch die Spule 22 ein Strom fließt, wird das Rohr 18 von dem Ventilsitz 20 abgehoben, das heißt in Figur 4 nach links bewegt. Dabei öffnen sich dann Kanäle 23, durch die das Fluid, nachdem es durch das Rohr 18 geflossen ist, aus dem Ventil herausfließen kann. Einzelheiten dieser Koaxialventile werden nicht näher erläutert, da sie bekannt sind.

In einer zu dem Koaxialventil 16 führenden Bohrung 24 ist ein Kolben 25 in der gleichen Weise angeordnet, wie dies unter Bezugnahme auf Figur 1 bereits erläutert wurde. Auch dieser Kolben 25 weist eine Kerbe 6 auf, in die das innere Ende 12 eines Drosselelements 10 mehr oder weniger weit eingreift. Die Änderung der Position des Kolbens 25 kann wieder durch einen Sensor 7 festgestellt werden. Die in Figur 1 erwähnte Feder 5 ist der Einfachheit halber hier nicht dargestellt. Der durch den Kolben 25, das Drosselelement 10, die Bohrung 24 und den Sensor 7 gebildete Strömungswächter ist in dem Strömungsweg des Koaxialventils 16 angeordnet, im dargestellten Beispiel unmittelbar vor diesem Koaxialventil. Der Strömungswächter bildet eine bauliche Einheit mit dem Koaxialventil. Mit Hilfe dieser insoweit beschriebenen und dargestellten Einrichtung kann festgestellt werden, ob, wenn ein Befehl zum Öffnen des Ventils gegeben wurde, dies tatsächlich dazu führt, dass das Fluid strömt. Mit Hilfe des Strömungswächters kann also das korrekte Arbeiten des Koaxialventils 16 überprüft werden.

Figur 5 zeigt, ebenfalls in einem Längsschnitt, ein Koaxialventil 26, bei dem das Rohr 18 an seiner Außenseite mit einem Kolben 27 verbunden ist. Der Kolben ist, zusammen mit dem Rohr 18, verschiebbar. Auf beiden Seiten des Kolbens 27 ist ein Druckraum 28, 29 vorhanden, in den ein Fluid, beispielsweise Pressluft, eingeleitet werden kann. Je nachdem, in welchen der beiden Räume 28, 29 Druck gegeben wird, wird das Ventil also geöffnet oder geschlossen. Es handelt sich im dargestellten Beispiel um ein Schaltventil, das durch eine Ansteuerung geöffnet und geschlossen werden kann.

Das in Strömungsrichtung gesehen vordere Ende 30 des Rohres 18, das den Verschlusskörper bildet, ist mit einem Kolben 35 verbunden. Der Kolben 35 wird also mit der Bewegung des Rohres 18 mit bewegt. Im übrigen ist der Kolben ähnlich aufgebaut wie bei den vorhergehenden Ausführungsformen, das heißt, er besitzt eine Kerbe 6, in die ein nicht näher erläutertes Drosselelement 10 mit seinem freien Ende 12 eingreift. Wieder ist ein Sensor 7 vorhanden. Mit Hilfe der in den Druckräumen 28, 29 herrschenden Drücke wird das Ventil geöffnet bzw. geschlossen. Die Öffnungsstellung soll einem bestimmten Volumenstrom entsprechen. Die Regelung dieses Volumenstroms erfolgt durch den Teil der Baueinheit, der bei der vorhergehenden Ausführungsform als Strömungswächter arbeitete. Lässt bei einem bestimmten eingestellten Volumenstrom der Volumenstrom nach, so verringert sich der Druckunterschied zwischen der angeströmten Vorderseite des Kolbens 35 und seiner Rückseite, so dass sich der Kolben 35 durch die Feder entgegen der Strömungsrichtung bewegt und damit das Rohr 18 etwas weiter von dem Ventilsitz 20 entfernt. Durch die Vergrößerung der Ventilöffnung wird damit der Volumenstrom wieder vergrößert. Die Figur 5 zeigt also ein Volumenstromregelventil. Zusätzlich kann mit Hilfe des Sensors 7 auch die Funktion des Strömungswächters ausgeübt werden.

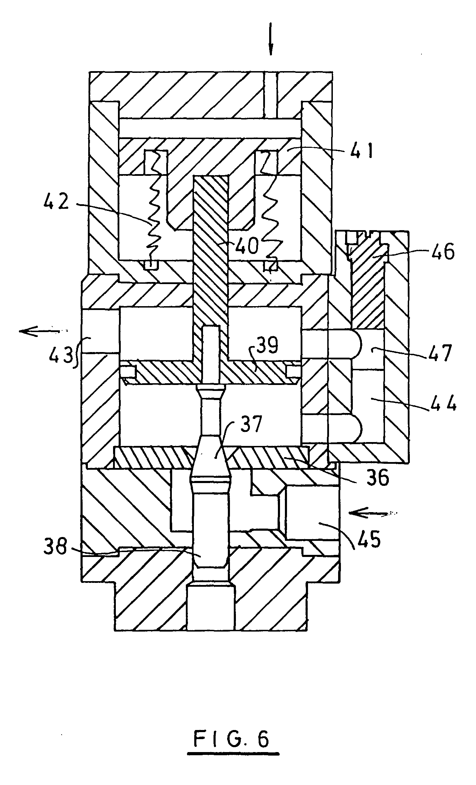

In Figur 6 ist wieder ein Volumenstromregelventil im Axialschnitt dargestellt, das diesmal allerdings kein Koaxialventil ist.

In einer Platte 36 des Ventilgehäuses ist eine Öffnung vorhanden, die den Ventilsitz bildet. Im dargestellten Beispiel ist das Ventil geschlossen. Auf dem Ventilsitz sitzt der kegelförmige Verschlusskörper 37 auf. Er ist im Bereich seines einen Endes in einer Öffnung mit einem Führungsabschnitt 38 geführt. Auf der gegenüberliegenden Seite ist der Verschlusskörper mit einem Kolben 39 verbunden, der seinerseits mit einem Schaft 40 in einen Raum außerhalb des Strömungswegs ragt. Dort ist an dem Schaft 40 ein weiterer Kolben 41 angebracht, der von einer angedeuteten Druckfeder 42 so beaufschlagt ist, dass das Ventil geschlossen bleibt. Zum Öffnen des Ventils wird durch die Öffnung in dem in Figur 6 oberen Abschlussdeckel in Richtung des angegebenen Pfeils Druck eingebracht, beispielsweise Druckluft. Dadurch wird der Verschlusskörper 37 verschoben, so dass er von dem Ventilsitz abgehoben wird. Wird dieser Steuerdruck abgeschaltet, wird das Ventil wieder geschlossen.

Das Ventilgehäuse enthält eine Einlassöffnung 45 für das zu steuernde Fluid. Die Einlassöffnung 45 führt in einem Raum auf der einen Seite des Kolbens 39, nämlich auf seiner Vorderseite. Aus diesem Raum führt eine Leitung 44 mit einer Querschnittsverringerung auf die gegenüberliegende Seite des Kolbens 39, der daher auf dieser Seite von dem Druck der aus der Leitung 44 abströmenden Flüssigkeit beaufschlagt wird. Aus diesem Raum führt das Ventil zu der Auslassöffnung 43.

Wird das Ventil geöffnet, wie oben beschrieben, so strömt das Fluid durch die Ventilöffnung, den Raum auf der Vorderseite des Kolbens 39, die Leitung 44, den Raum auf der Rückseite des Kolbens 39 und durch das Ventil zu dem Auslass 43. Bei einer bestimmten Stellung wird der Volumenstrom hier wieder durch die Verschiebung des Kolbens 39 geregelt. Bei dem in Figur 6 dargestellten Ventil handelt es sich also wieder um ein Volumenstromregelventil. Die Querschnittsverminderung in der Leitung 44 kann durch ein Drosselelement 46 eingestellt werden, das um seine Achse verdreht werden kann. Dann stellt sich das Drosselende 47 des Drosselelements 46 quer und ragt dadurch in die Leitungen 44 stärker hinein. Anstelle einer Verdrehung des Drosselelements 46 ist es ebenfalls möglich, ähnlich wie bei den vorhergehenden Ausführungsformen, das Drosselement 46 mit Hilfe eines Gewindes mehr oder weniger weit in die Leitung 44 einzuschrauben. Auch dies führt zu einer Änderung der Querschnittsverminderung.

## Patentansprüche

1. Einrichtung zum Überprüfen und/oder Beeinflussen der Strömung in einem Fluid, mit
1.1 einem bewegbaren Kolben (4, 25, 35, 39), der derart angeordnet ist, dass
1.1.1 er auf seiner Vorderseite von dem anströmenden Fluid und
1.1.2 auf seiner Rückseite von dem abströmenden Fluid beaufschlagt wird,
1.2 einer Feder (5), die
1.2.1 den Kolben entgegen der Strömungsrichtung des Fluids beaufschlagt, sowie mit
1.3 einer Einrichtung zur Abnahme der Position des Kolbens (4, 25, 35, 39) an mindestens einer Stelle.

2. Einrichtung nach Anspruch 1, bei der der Kolben (39) im Nebenstrom des Fluids angeordnet ist.

3. Einrichtung nach Anspruch 1 oder 2, bei der der Kolben (4,25,25) im Hauptstrom des Fluids angeordnet ist.

4. Einrichtung nach einem der vorhergehenden Ansprüche, bei der die Einrichtung zur Abnahme der Position des Kolbens (4, 25, 35, 39) ein insbesondere berührungsfrei arbeitender Detektor bzw. Sensor (7) ist.

5. Einrichtung nach einem der vorhergehenden Ansprüche, bei der die Einrichtung zur Abnahme der Position des Kolbens (4, 25, 35, 39) in mehreren Positionen des Kolbens arbeitet, insbesondere kontinuierlich seine Position feststellt.

6. Einrichtung nach einem der vorhergehenden Ansprüche, bei der zur Bildung eines Volumenstromregelventils die Einrichtung zur Abnahme der Position des Kolbens (35, 39) ein bewegbarer Teil eines zugeordneten Ventils ist, insbesondere der Ventilverschlusskörper.

7. Einrichtung nach einem der vorhergehenden Ansprüche, bei der der Kolben (4, 25, 35) in einer von dem Fluid durchströmten Bohrung (2) derart angeordnet ist, dass er eine Verringerung des Querschnitts der Strömung bewirkt.

8. Einrichtung nach einem der vorhergehenden Ansprüche, bei der der Kolben (4, 25, 35, 39) zwischen zwei Extrempositionen begrenzt bewegbar angeordnet ist.

9. Einrichtung nach einem der vorhergehenden Ansprüche, bei der die Druckdifferenz zwischen der Vorderseite und der Rückseite des Kolbens (4, 25, 35, 39) veränderbar bzw. einstellbar ist, vorzugsweise auch während des Strömens des Fluids.

10. Einrichtung nach Anspruch 9, bei der die Änderung der Druckdifferenz durch eine Veränderung einer Querschnittsverringerung des Strömungsquerschnitts erfolgt.

11. Einrichtung nach einem der vorhergehenden Ansprüche, bei der die Druckdifferenz zwischen der Vorderseite und der Rückseite des Kolbens (4, 25, 35, 39) von der Position des Kolbens (4, 25, 35, 39) abhängig ist.

12. Einrichtung nach einem der vorhergehenden Ansprüche, bei der die Einrichtung im Strömumgsweg eines Ventils angeordnet ist.

13. Einrichtung nach Anspruch 12, bei der die Einrichtung mit dem Ventil zu einer Baueinheit zusammengefasst ist und/oder der Kolben (35) mechanisch mit einem Ventilverschlusskörper (18) des Ventils gekoppelt ist, zur Bildung eines Volumenstromregelventils.

14. Einrichtung nach einem der vorhergehenden Ansprüche, bei der der Kolben (4, 25, 35) eine in Strömungsrichtung verlaufende seitlich offene Kerbe (6) aufweist, in die ein durch die Wand einer Leitung (1) hindurchgreifendes Drosselelement (10) eingreift.

15. Einrichtung nach Anspruch 14, bei der der Querschnitt der Kerbe (6) in Längsrichtung des Kolbens (4, 25, 35) nicht konstant ist.
